# DEMANDE DE BREVET EUROPEEN

(11) **EP 1 169 959 A1**
(43) Date de publication de la demande: **09.01.2002**
(21) Numéro de dépôt: 01401824.6
(22) Date de dépôt: 06.07.2001
(51) Int. Cl.: A47J 37/12

(54) **Appareil electrique de cuisson comportant une cuve amovible**

(30) Priorité: 06.07.2000 FR 0009151
(71) Demandeur: Moulinex S.A., 92979 Paris la Defense (FR)
(72) Inventeur: Bois, Bernard, 14000 Caen (FR); Lereverend, Jean, 14830 Langrune sur Mer (FR)
(74) Mandataire: Busquets, Jean-Pierre

(57) **Abrégé**

Appareil électrique de cuisson comportant, dans un boîtier (1), une résistance chauffante (6), une cuve amovible (8) adaptée à occuper une position de cuisson dans laquelle le fond (10) de cette cuve est en contact thermique avec la résistance (6), et un organe palpeur mobile(20) susceptible d'être actionné par la cuve (8) lors de la mise en place de cette dernière dans le boîtier.

Selon l'invention, l'organe palpeur (20) est déplacé par la cuve, d'abord suivant une première course (c), lorsque la cuve (8) vient occuper une position basse pour laquelle le fond (10) de cette cuve est situé à faible distance (d) de la résistance (6) et dans laquelle l'organe palpeur (20) provoque la fermeture du circuit d'alimentation électrique de la résistance (6), puis suivant une seconde course (c'), lorsque la cuve (8) passe de sa position basse à sa position de cuisson dans laquelle l'organe palpeur (20) maintient la fermeture du circuit d'alimentation électrique de la résistance.

## Description

La présente invention se rapporte à un appareil électrique de cuisson, notamment mais non exclusivement à une friteuse électrique destinée à la cuisson, dans un bain d'huile en particulier, d'aliments tels que des frites, des poissons ou de la viande, et comportant, dans un boîtier, une résistance électrique chauffante disposée dans un plan horizontal dans le fond du boîtier, une cuve amovible adaptée à occuper une position dite de cuisson pour laquelle le fond de cette cuve est en contact thermique avec la résistance, et un interrupteur de commande de l'alimentation électrique de la résistance.

Elle concerne, plus précisément, un appareil de ce genre qui comporte en outre un organe palpeur monté mobile dans le boîtier, susceptible d'être actionné par la cuve lors de la mise en place de cette dernière dans le boîtier, et adapté à actionner l'interrupteur.

On sait que dans un tel appareil de cuisson à cuve amovible, l'organe palpeur mobile constitue notamment un organe de détection de présence de cuve qui permet d'empêcher l'activation de la résistance électrique chauffante lorsque la cuve est retirée, par exemple pour nettoyage, permettant ainsi d'assurer la sécurité de l'utilisateur et d'éviter tout dommage susceptible d'être causé à l'appareil.

Dans un appareil de cuisson connu de ce genre, après engagement de la cuve dans le boîtier, l'organe palpeur est alors généralement actionné par le fond de la cuve au moment même où cette dernière vient occuper sa position de cuisson pour laquelle son fond est en contact thermique avec la résistance, de sorte que dans cette position de cuisson de la cuve, l'organe palpeur enfonce une touche de l'interrupteur visant à le fermer et, ainsi, à activer la résistance chauffante. Toutefois, à la suite d'un défaut de reproductibilité des cotes de la cuve lors de sa fabrication en grande série et/ou lors de son montage dans le boîtier, il peut arriver notamment que la course de l'organe palpeur actionné par le fond de la cuve soit insuffisante pour que l'organe palpeur en fin de course, la cuve étant en position de cuisson, puisse enfoncer d'une manière efficace la touche de l'interrupteur, empêchant dès lors la fermeture de l'interrupteur et donc l'activation de la résistance électrique chauffante ; de fait, l'organe palpeur est susceptible d'être inopérant lorsque la cuve est présente dans le boîtier.

L'invention a notamment pour but de remédier à ces inconvénients et de perfectionner de manière simple et peu coûteuse un appareil électrique de cuisson à cuve amovible, du type exposé ci-dessus, qui soit parfaitement adapté à une fabrication en grande série, et dans lequel l'organe palpeur de détection de présence de cuve soit d'une mise en oeuvre parfaite et d'une grande fiabilité.

Selon l'invention, l'organe palpeur est déplacé sous l'action de la cuve, d'abord suivant une première partie de course déterminée, lorsque la cuve est mise en place dans le boîtier jusqu'à une position dite basse pour laquelle le fond de la cuve est situé à faible distance au-dessus de la résistance et dans laquelle l'organe palpeur commande la fermeture de l'interrupteur, puis suivant une seconde partie de course lorsque la cuve passe de sa position basse à sa position de cuisson dans laquelle l'organe palpeur maintient la fermeture de l'interrupteur.

Ainsi, grâce à la surcourse de l'organe palpeur lors du passage de la cuve de sa position basse à sa position de cuisson, on comprend que l'organe palpeur est déplacé par la cuve suivant une course totale qui est désormais relativement importante pour ne plus être liée à des cotes de fabrication de cuve trop précises, garantissant ainsi la fermeture de l'interrupteur sous l'action de l'organe palpeur en fin de course totale.

Les caractéristiques et avantages de l'invention ressortiront d'ailleurs de la description qui va suivre, à titre d'exemple non limitatif, en référence aux dessins annexés dans lesquels :

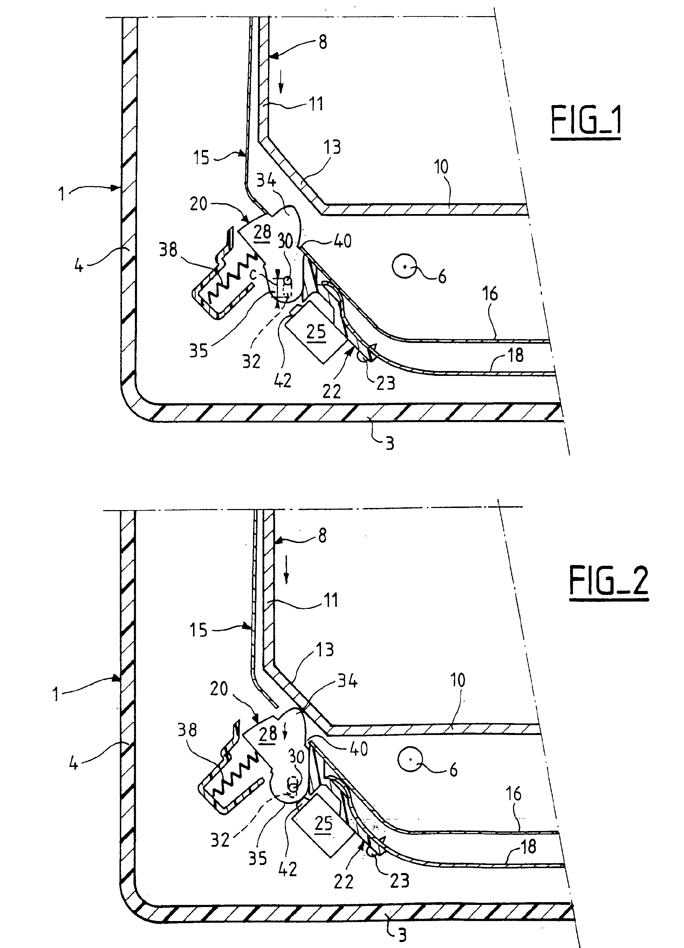

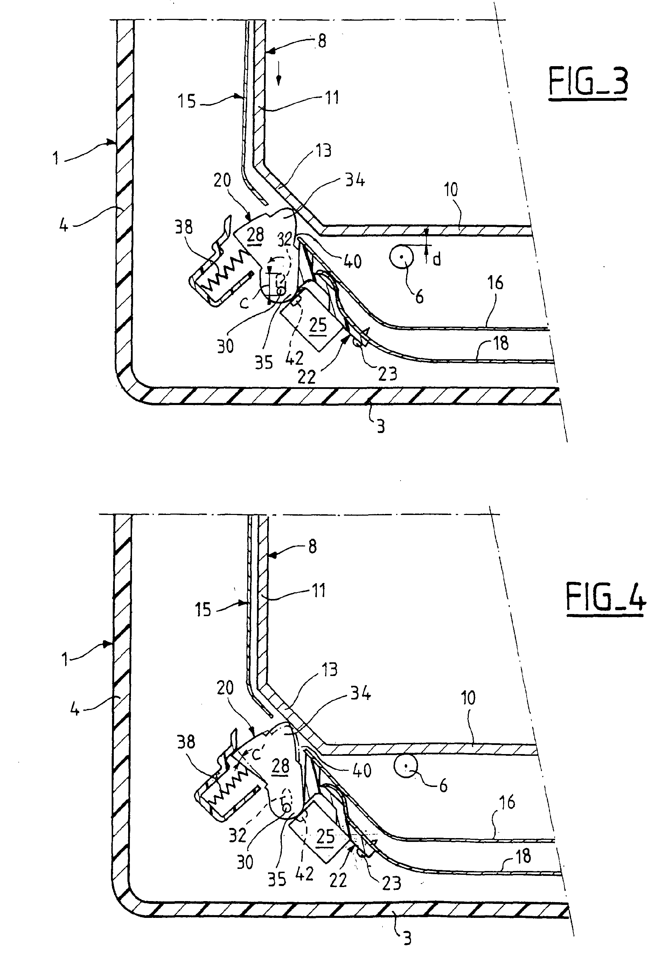

- les figures 1 à 4 sont des vues schématiques partielles similaires en coupe verticale d'un appareil électrique de cuisson selon l'invention, montrant la cuve amovible, successivement, en une position haute (figure 1) pour laquelle elle est espacée d'un organe palpeur mobile, en une position descendante (figure 2) pour laquelle elle déplace l'organe palpeur, en une position basse (figure 3) pour laquelle le fond de cette cuve est à faible distance de la résistance chauffante, et en une position de cuisson (figure 4) pour laquelle le fond de cette cuve est en contact thermique avec la résistance ; et

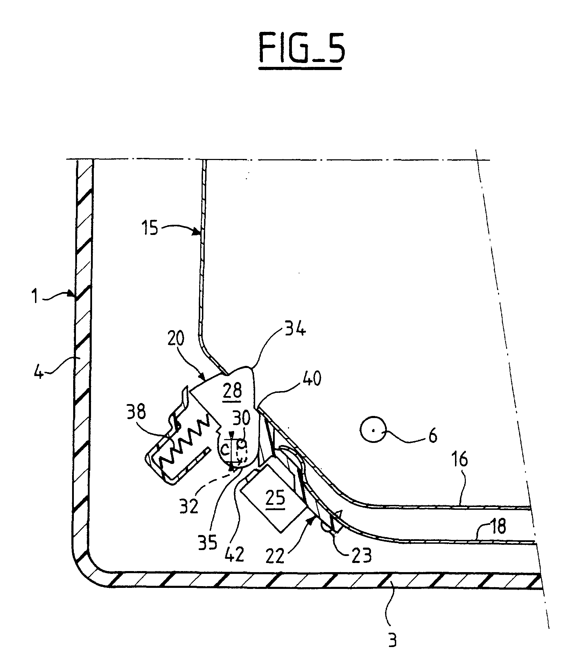

- la figure 5 est une vue similaire à la figure 4, après retrait de la cuve amovible.

L'appareil électrique de cuisson représenté en partie sur les figures 1 à 5 est une friteuse ménagère destinée à la cuisson d'aliments par immersion dans un bain d'huile en particulier, et du type comportant un boîtier 1 dont on ne voit que partiellement le fond 3 et la face arrière 4, une résistance électrique chauffante 6 disposée dans un plan horizontal dans le fond de ce boîtier, et une cuve métallique amovible 8 (figures 1 à 4) susceptible de contenir le bain d'huile pour la cuisson des aliments, délimitée par une paroi de fond 10 et une paroi périphérique latérale dont on ne voit sur les figures que la partie arrière 11, et adaptée à s'engager dans le boîtier pour venir occuper une position de cuisson (figure 4) pour laquelle le fond 10 de cette cuve est en contact thermique avec la résistance 6, laquelle assure un chauffage par conduction et/ou par rayonnement de la cuve 8.

Le boîtier 1 est de préférence moulé en une matière plastique telle que, par exemple, du polypropylène, tandis que la cuve amovible 8 est de préférence réalisée par emboutissage d'une plaque de tôle qui est ensuite recouverte intérieurement et extérieurement d'un revêtement résistant à la chaleur, par exemple de l'émail, qui permet de faciliter le nettoyage de la cuve et d'éviter l'adhérence des aliments sur la surface intérieure de la cuve.

Dans l'exemple de réalisation représenté sur les figures 1 à 4, la cuve 8 comporte un méplat 13 situé dans une zone inférieure de la paroi périphérique latérale 11, adjacente à la paroi de fond 10 de cette cuve.

La cuve 8 est par exemple de forme sensiblement parallélépipédique, et le méplat 13 s'étend alors de préférence sur une zone de la partie arrière 11 de la cuve.

D'autres formes de cuve peuvent cependant être envisagées, sans s'écarter pour autant du cadre de l'invention.

Dans l'exemple de réalisation illustré aux figures 1 à 5, la cuve amovible 8 est destinée à être montée à l'intérieur d'une enceinte délimitée par une double paroi métallique 15 dont la base 16 sert avantageusement de réflecteur au rayonnement calorifique de la résistance électrique chauffante 6 lorsque la cuve 8 est en position de cuisson (figure 4). Un écran thermique 18 est de préférence interposé entre la base 16 de la double paroi 15 et le fond 3 du boîtier 1.

La friteuse électrique comporte en outre un organe palpeur 20 faisant office d'organe de détection de présence de cuve, qui est monté mobile dans un support 22 fixé, par exemple au moyen de vis 23, sur l'écran thermique 18. Le support 22 est de préférence réalisé en matière plastique.

Cet organe palpeur 20 est adapté à occuper une position de repos (figure 5) pour laquelle la cuve amovible est absente dans le boîtier 1 et dans laquelle il commande un interrupteur de sécurité 25, agencé dans le support 22 et monté en série avec la résistance 6, de manière à ouvrir le circuit d'alimentation électrique de la résistance chauffante 6. Lorsque la cuve 8 est présente dans le boîtier 1, l'organe palpeur 20 est actionné par la cuve 8 et est apte à commander l'interrupteur de sécurité 25 de manière à fermer le circuit d'alimentation électrique de la résistance 6.

Selon l'invention, l'organe palpeur 20 est déplacé sous l'action de la cuve amovible 8, d'abord suivant une première partie de course déterminée, lorsque la cuve 8 est mise en place dans le boîtier 1 (figures 1 et 2) jusqu'à une position dite basse (figure 3) pour laquelle le fond 10 de cette cuve est situé à faible distance, notée d sur la figure 3, au-dessus de la résistance 6 et dans laquelle l'organe palpeur 20 commande l'interrupteur 25 de manière à fermer le circuit d'alimentation électrique de la résistance 6, puis suivant une seconde partie de course lorsque la cuve 8 passe de sa position basse (figure 3) à sa position de cuisson (figure 4) pour laquelle le fond 10 de cette cuve est en contact thermique avec la résistance 6 et dans laquelle l'organe palpeur 20 maintient l'interrupteur 25 à l'état de fermeture du circuit d'alimentation électrique de la résistance 6.

Dans le mode d'exécution représenté sur les figures 1 à 5, l'organe palpeur 20 est conformé en un basculeur 28 présentant, d'une part, un axe transversal 30 traversant une gorge de guidage verticale 32 pratiquée dans le support 22 et ayant une longueur axiale égale à la première partie de course, notée c sur les figures 1 et 3, et d'autre part, deux doigts d'appui, dits respectivement supérieur 34 et inférieur 35, situés de part et d'autre de l'axe 30. Le basculeur 28 est sollicité par un ressort de rappel 38 logé dans le support 22. Une ouverture 40 est pratiquée dans la double paroi 15 de manière à permettre le passage du doigt supérieur 34 du basculeur 28.

Lors de la mise en place de la cuve 8 dans le boîtier 1, et avant actionnement du basculeur 28 par la cuve 8, comme représenté sur la figure 1, le basculeur 28 occupe sa position de repos dans laquelle son axe 30 est en appui sur l'extrémité haute de la gorge de guidage 32, et son doigt inférieur 35 situé à distance de l'interrupteur 25 de manière que le circuit d'alimentation électrique de la résistance 6 soit ouvert.

Au cours de la descente de la cuve 8 à l'intérieur du boîtier 1, le méplat 13 de cette cuve vient actionner par contact le doigt supérieur 34 du basculeur 28 ; ce dernier est alors animé, à l'encontre du ressort 38, d'un mouvement de translation verticale descendante qui est guidé par le déplacement de l'axe 30 dans la gorge de guidage 32 (voir figure 2) et qui est imprimé sur la course c. En fin de cette course du basculeur 28, la cuve 8 occupe sa position basse, telle qu'illustrée à la figure 3, pour laquelle le fond 10 de cette cuve est situé à la distance d, par exemple de l'ordre de 1 millimètre, de la résistance 6. Dans cette position basse de la cuve 8, figure 3, l'axe 30 du basculeur 28 en fin de course est en appui sur l'extrémité basse de la gorge de guidage 32, et le doigt inférieur 35 du basculeur 28 enfonce une touche 42 de l'interrupteur 25 de manière à fermer le circuit d'alimentation électrique de la résistance 6.

Depuis sa position basse telle que montrée à la figure 3, la cuve 8 poursuit sa descente en actionnant toujours par son méplat 13 le doigt supérieur 34 du basculeur 28 ; le basculeur 28 (représenté en traits mixtes sur la figure 4) est alors maintenant animé, à l'encontre du ressort 38, d'un mouvement de basculement en sens anti-horaire, autour de son axe 30, imprimé sur une course angulaire, appelée surcourse de sécurité, notée c' sur la figure 4, en fin de laquelle la cuve 8 occupe sa position de cuisson, illustrée à la figure 4, pour laquelle le fond 10 de cette cuve est en contact thermique avec la résistance 6. Dans cette position de cuisson de la cuve 8, figure 4, le doigt inférieur 35 du basculeur 28 maintient enfoncée la touche 42 de l'interrupteur 25 ; le circuit d'alimentation électrique de la résistance 6 reste donc fermé.

Ainsi, l'opération de mise en place de la cuve 8 à l'intérieur du boîtier 1 fait intervenir un mouvement de translation verticale descendante de l'organe palpeur 20 qui s'effectue sur une course prédéterminée, suivi d'un mouvement de basculement de l'organe palpeur 20 qui, lui, s'effectue sur une surcourse de sécurité permettant d'assurer la fermeture du circuit d'alimentation électrique de la résistance chauffante 6.

A partir de la position de cuisson de la cuve 8 montrée à la figure 4, le retrait de la cuve amovible 8 provoque un retour du basculeur 28, sous l'action du ressort 38, dans sa position de repos telle que montrée à la figure 5.

Il convient de noter que, sans sortir du cadre de l'invention, l'organe palpeur 20 peut également constituer un organe apte à détecter un niveau d'huile suffisant dans la cuve 8 pour la réalisation d'une friture, et dans ce cas à fermer le circuit d'alimentation électrique de la résistance chauffante 6 lorsque la cuve 8 suffisamment remplie d'huile vient occuper sa position basse telle qu'illustrée à la figure 3. Le ressort de rappel 38 de l'organe palpeur 20 est alors correctement taré en fonction du poids de l'huile à détecter.

## Revendications

1. Appareil électrique de cuisson comportant, dans un boîtier (1), une résistance électrique chauffante (6) disposée dans un plan horizontal dans le fond du boîtier, une cuve amovible (8) adaptée à occuper une position dite de cuisson pour laquelle le fond (10) de cette cuve est en contact thermique avec la résistance (6), un interrupteur (25) de commande de l'alimentation électrique de la résistance, et un organe palpeur (20) monté mobile dans le boîtier, susceptible d'être actionné par la cuve (8) lors de la mise en place de cette dernière dans le boîtier, et adapté à actionner l'interrupteur (25), **caractérisé en ce que** l'organe palpeur (20) est déplacé sous l'action de la cuve (8), d'abord suivant une première partie de course déterminée (c), lorsque la cuve (8) est mise en place dans le boîtier (1) jusqu'à une position dite basse pour laquelle le fond (10) de la cuve est situé à faible distance (d) au-dessus de la résistance (6) et dans laquelle l'organe palpeur (20) commande la fermeture de l'interrupteur (25), puis suivant une seconde partie de course (c') lorsque la cuve (8) passe de sa position basse à sa position de cuisson dans laquelle l'organe palpeur (20) maintient la fermeture de l'interrupteur (25).

2. Appareil selon la revendication 1, **caractérisé en ce que** l'organe palpeur (20) est conformé en un basculeur (28) présentant, d'une part, un axe transversal (30) traversant une gorge de guidage verticale (32) pratiquée dans le boîtier (1) et ayant une longueur axiale égale à la première partie de course (c), et d'autre part, deux doigts d'appui, dits respectivement supérieur (34) et inférieur (35), situés de part et d'autre de l'axe (30), ledit basculeur (28) étant animé par suite de l'actionnement de la cuve (8) sur le doigt d'appui supérieur (34), d'une part, suivant la première partie de course (c), d'un mouvement de translation verticale descendante guidé par la gorge de guidage (32), le doigt d'appui inférieur (35) venant enfoncer, en fin de cette première partie de course du basculeur, une touche (42) de l'interrupteur (25) visant à le fermer, et d'autre part, suivant la seconde partie de course (c'), d'un mouvement de basculement autour de l'axe (30) de manière que le doigt d'appui inférieur (35) maintienne enfoncée la touche (42) de l'interrupteur (25).

3. Appareil selon la revendication 2, **caractérisé en ce que** le basculeur (28) est associé à un ressort de rappel (38) qui tend à le rappeler en une position de repos dans laquelle le basculeur (28) commande l'ouverture de l'interrupteur (25) lorsque la cuve (8) est retirée du boîtier.

4. Appareil selon la revendication 2 ou 3, dans lequel la cuve (8) comporte une paroi périphérique latérale (11) et un méplat (13) situé dans une zone inférieure de cette paroi latérale, adjacente au fond (10) de la cuve, **caractérisé en ce que** le doigt d'appui supérieur (34) du basculeur (28) est actionné par le méplat (13) de la cuve (8) lors de la mise en place de cette dernière dans le boîtier.

5. Appareil selon l'une quelconque des revendications précédentes, **caractérisé en ce qu**'il est constitué par une friteuse.
